Europäisches Patentamt

European Patent Office

Office européen des brevets

(19)

(11) Veröffentlichungsnummer: **0 303 821 B1**

(12)

# EUROPÄISCHE PATENTSCHRIFT

(45) Veröffentlichungstag der Patentschrift:
27.03.91 Patentblatt 91/13

(51) Int. Cl.⁵: **F16B 5/01**

(21) Anmeldenummer: **88111084.5**

(22) Anmeldetag: **12.07.88**

(54) **Einsatz für ein zumindest teilweise aus Kunststoff bestehendes Bauteil.**

(30) Priorität: **05.08.87 DE 3725974**

(43) Veröffentlichungstag der Anmeldung:
**22.02.89 Patentblatt 89/08**

(45) Bekanntmachung des Hinweises auf die
Patenterteilung:
**27.03.91 Patentblatt 91/13**

(84) Benannte Vertragsstaaten:
**FR GB IT**

(56) Entgegenhaltungen:
**EP-A- 297 497**
**DE-A- 2 911 058**
**DE-B- 1 400 888**
**FR-A- 2 408 747**

(73) Patentinhaber: **Messerschmitt-Bölkow-Blohm**
**Gesellschaft mit beschränkter Haftung**
**Robert-Koch-Strasse**
**W-8012 Ottobrunn (DE)**

(72) Erfinder: **Oefner, Walter**
**Painkamerstrasse 22a**
**W-8156 Otterfing (DE)**

## Beschreibung

Einsatz für ein zumindest teilweise aus Kunststoff bestehendes Verbundbauteil

Die Erfindung betrifft einen hohlen Einsatz für ein zumindest teilweise aus Kunststoff bestehendes Verbundbauteil mit wenigstens einem festen Kopf an einem im wesentlichen hohlzylindrischen Schaft.

Derartige beispielsweise als sog. Inserts in Sandwichbauteilen für Schraubverbindungen eingebettete Einsätze meist aus Metall mit einer Gewindebohrung bedürfen bisher einer Drehsicherung durch besondere Verankerungsteile, wie an den Sandwichdeckhäuten angreifende Klammern o. dgl.. Ein Verzicht auf solche relativ aufwendigen und u.U. auch der Forderung nach Außenhautbündigkeit entgegenstehenden Verankerungsteile ist auch durch sog. unmittelbares Einpressen im betreffenden Bauteil möglich. Dies hat jedoch bei einer Sandwichstruktur des Bauteils den Nachteil, daß lediglich der Sandwichkern zur Drehsicherung beiträgt, d.h. insoweit bleiben die in aller Regel steiferen Deckhäute ungenutzt bzw. unbelastet. Demgegenüber wäre ein Einsatz entsprechend einem durch die EP-A 0297 497 (veröffentlicht 4,1,89, Stand der Technik gemäß Art. 54,3 EPÜ) bekannten Befestigungsmittel mit einem an einem an einem hohlzylindrischen Schaft exzentrisch angeordneten Kopf zwar in der Deckhaut eines Sandwichbauteils drehgesichert, jedoch ohne Verankerung in Axialrichtung.

Der Erfindung liegt daher für einen Einsatz dieser Art die Aufgabe zugrunde, außer der Drehsicherung (ohne gesonderte Verankerungsteile) bei völliger Oberflächenbündigkeit des Einsatzes auch dessen Verankerung gegen axiales Verschieben im Bauteil zu ermöglichen.

Diese Aufgabe ist mit den Merkmalen des Patentanspruchs 1 gelöst.

Bei dem Einsatz gemäß der Erfindung verläuft bzw. mündet eine gegenüber dessen Grundkörper vorzugsweise konzentrische Bohrung nur im Kopf exzentrisch oder dort zumindest stärker exzentrisch als im Schaft. Folglich ist die Drehsicherung des Einsatzes vornehmlich auf dessen Kopf verlagert, wobei die Anwendung von Sicherungsmaßnahmen beim Schaft auch gegen Drehen, aber insbesondere gegen axiales Verschieben nicht ausgeschlossen wird. Eine entsprechende Verankerung des Schaftes im Verbundbauteil durch ein Bindemittel, z.B. einen Schaumstoff, setzt bei dem Einsatz nur den Durchlaß für das Bindemittel im Kopf voraus.

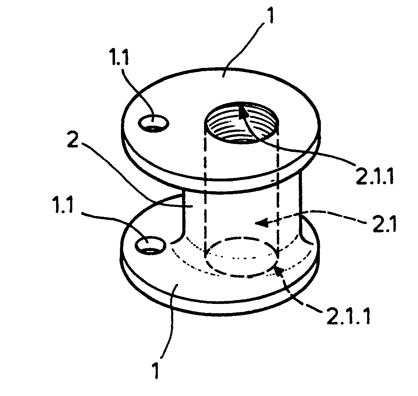

Nachfolgend wird die Erfindung anhand eines Ausführungsbeispiels erläutert. Dazu zeigt die Zeichnung in perspektivischer Ansicht einen Einsatz z.B. aus Metall (sog. Insert), welcher als Schraubverbindungsmittel in einer Sandwichplatte (von dessen Höhe) entsprechender Dicke drehsicher einsetzbar ist. Sofern diese nicht dargestellte Sandwichplatte z.B. einen Kern aus Schaumkunststoff zwischen zwei steifen Deckhäuten aus Aluminium aufweist, ist diese Drehsicherung des Einsatzes hauptsächlich gegenüber den Deckhäuten sinnvoll. Deshalb ist der Einsatz mit festen Köpfen 1 versehen, welche jeweils an seinem hohlzylindrischen Schaft 2 exzentrisch angeordnet sind. Die Exzentrizität des einzelnen Kopfes 1 gegenüber dem Schaft 2 ist derart, daß die Mündung 2.1.1 seiner konzentrischen Bohrung 2.1 im Kopf 1 exzentrisch verläuft. Insgesamt setzt sich folglich die Bohrung 2.1 aus einem konzentrischen und zwei exzentrischen Abschnitten zusammen, welche bestimmungsgemäß insgesamt als eine durchgehende Gewindebohrung ausgebildet sind.

Selbstverständlich erfordert der Einsatz in der Sandwichplatte eine Bohrung mit einem Durchmesser entsprechend demjenigen der beiden Köpfe 1. Nach dem deckhautbündigen Einführen in eine solche Bohrung der Sandwichplatte braucht lediglich der Hohlraum im Plattenkern um den Schaft 2 über Durchlässe 1.1 der Köpfe 1 mit Schaum aufgefüllt zu werden, um den Einsatz auch in Axialrichtung zu verankern. Dessen Sicherung gegen Verdrehen ist durch den (Paß-)Sitz des einzelnen Kopfes 1 in der zugeordneten Deckhaut der Sandwichplatte zwangsläufig erreicht.

Es versteht sich, daß ein derartiger Einsatz eine zusätzliche Drehsicherung z.B. durch Einpressung des Schaftes 2 im (Sandwich-) Plattenkern nicht ausschließt. Alternativ kann auch zusätzlich eine Exzentrizität der Bohrung 2.1 gegenüber dem Schaft 2 vorgesehen sein, d.h. die Exzentrizität der Mündungen 2.1.1 der Bohrung 2.1 gegenüber den Köpfen 1 ist dann größer als die Exzentrizität der Bohrung 2.1 gegenüber dem Schaft 2.

Schließlich ist Metall als Werkstoff des Einsatzes nicht zwingend, hierfür kommen ebenso Verbundbauweisen in Betracht.

## Ansprüche

1. Hohler Einsatz für ein zumindest teilweise aus Kunststoff bestehendes Verbundbauteil in Sandwichbauweise, mit wenigstens einem festen Kopf (1) an einem im wesentlichen hohlzylindrischen Schaft (2) unter exzentrischer Anordnung des Kopfes (1) gegenüber dem Schaft (2) mit entsprechender Exzentrizität der Mündung (2.1.1) seiner, im Schaft vorzugsweise konzentrischen, Bohrung (2.1) im Kopf (1), welcher einen Durchlaß (1.1) für ein Bindemittel zwischen dem Schaft (2) und Verbundbauteil aufweist.

## Claims

1. A hollow insert for a composite construction part, which is at least partially composed of synthetic material and built in sandwich fashion, having at least one solid head (1) on a substantially hollow cylindrical shaft (2), the head (1) being eccentrically arranged relative to the shaft (2), with respective eccentricity in the head (1) of the mouth (2.1.1) of the shaft bore (2.1), which is preferably concentric to the shaft, the head also having a passage (1.1) for a bonding substance between the shaft (2) and the composite construction part.

## Revendications

1. Pièce d'insertion creuse pour un élément constructif composite en construction sandwich constitué au moins partiellement de matière plastique, avec au moins une tête fixe (1) sur un corps (2) sensiblement en forme de cylindre creux, avec une disposition excentrique de la tête (1) par rapport au corps (2), et avec une excentricité correspondante de l'embouchure (2.1.1) de son perçage (2.1) dans la tête (1), le perçage (2.1) étant de préférence concentrique dans le corps, et la tête (1) présentant un passage (1.1) pour un agent liant entre le corps (2) et l'élément constructif composite.